# EUROPEAN PATENT APPLICATION

(11) **EP 2 432 160 A1**
(43) Date of publication of application: **21.03.2012**
(21) Application number: 09844514.1
(22) Date of filing: 15.05.2009
(51) Int. Cl.: H04L 12/26

(54) **METHOD, DEVICE AND SYSTEM FOR MEASURING NETWORK PERFORMANCE**

(71) Applicant: Huawei Technologies Co., Ltd., Shenzhen, Guangdong 518129 (CN)
(72) Inventor: SONG, Jianmin, Shenzhen Guangdong 518129 (CN); MA, Peng, Shenzhen Guangdong 518129 (CN); CHEN, Dapeng, Shenzhen Guangdong 51812 (CN); YAO, Zheng, Shenzhen Guangdong 51812 (CN); PAN, Lei, Shenzhen Guangdong 518129 (CN); XUE, Jing, Shenzhen Guangdong 518129 (CN)
(74) Representative: Epping - Hermann - Fischer
(86) International application number: PCT/CN2009/071811
(87) International publication number: WO 2010/130102

(57) **Abstract**

The present invention relates to the communications field, and discloses a method for measuring network performance. With the method, a receiving end receives a performance measurement message corresponding to a data stream, obtains a performance measurement parameter corresponding to the data stream, so that stream-based network performance measurement can be implemented. The present invention also discloses an apparatus and a system for measuring network performance, and another method for measuring network performance.

## Description

### FIELD OF THE INVENTION

The present invention relates to the communications field, and in particular, to a method, an apparatus, and a system for measuring network performance.

### BACKGROUND OF THE INVENTION

Service development brings more and more challenges to a network. For example, in a video multicast service, if a packet loss or a long delay occurs in a process of transmitting data streams, a video image has mosaics or lacks smoothness, which affects user experience. Therefore, how to measure performance such as a packet loss and a delay of a network and to locate a fault is a problem that urgently needs to be solved.

In the prior art, performance such as a single-side packet loss, a dual-side packet loss, a one-way delay, and a two-way delay is detected through a Loss Measurement Message (LMM), a Continuity Check Message (CCM), a One-way Delay Measurement (1DM), and a Delay Measurement Message (DMM) or a Delay Measurement Reply (DMR) respectively.

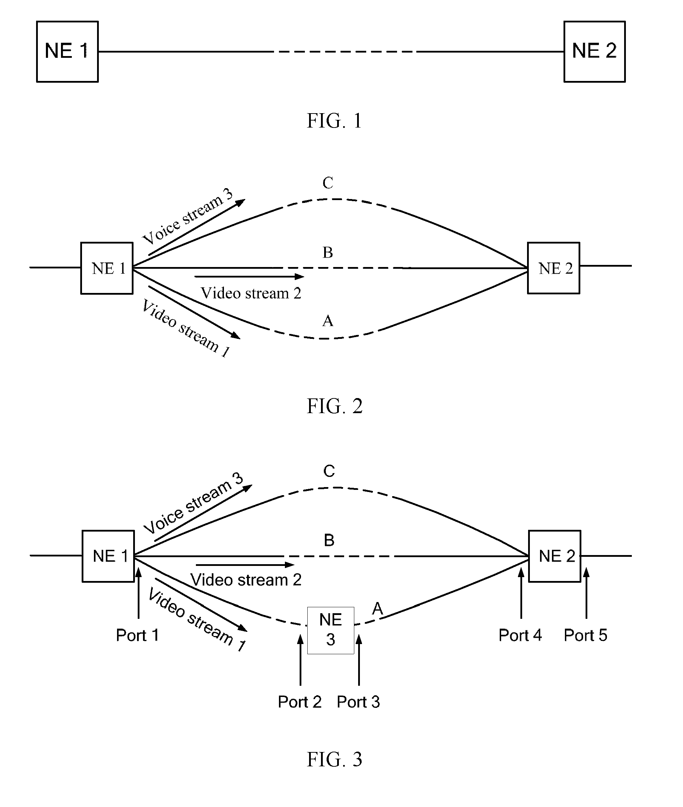

Taking the one-way delay as an example, as shown in FIG. 1, Network Element (NE) 1 and NE 2 are two ends of a maintenance domain. When a delay between NE 1 and NE 2 needs to be measured, NE 1 may send a 1DM message to NE 2. The 1DM message carries a timestamp t1 of NE 1. After receiving the 1DM message, NE 2 obtains the timestamp t1; according to a local timestamp (that is, a timestamp of NE 2) at the time of receiving the message, the delay between NE 1 and NE 2 is (t2 - t1).

However, in the process of implementing the present invention, the inventor finds at least the following problems in the prior art: The foregoing method is a performance measurement method that is oriented to a layer-2 network, and a stream-based network performance measurement method cannot be implemented.

### SUMMARY OF THE INVENTION

Embodiments of the present invention provide the following technical solutions to solve a problem that detection on stream-based network performance cannot be implemented in the prior art.

A method for measuring network performance includes:
receiving, by a receiving end, at least one performance measurement message, where the performance measurement message carries a performance measurement parameter of a transmitting end of the performance measurement message, and the performance measurement parameter of the transmitting end corresponds to a first data stream;
obtaining the performance measurement parameter of the transmitting end, and determining a performance measurement parameter of the receiving end, where the performance measurement parameter of the receiving end corresponds to the first data stream; and
measuring network performance between the transmitting end and the receiving end according to the performance measurement parameter of the transmitting end and the performance measurement parameter of the receiving end, where the network performance corresponds to the first data stream; where
the performance measurement message is sent by the transmitting end based on the first data stream.

A method for measuring network performance includes:
receiving, by a receiving end, at least one performance measurement message, where the performance measurement message carries a performance measurement parameter of a transmitting end of the performance measurement message;
forwarding the performance measurement message to a downstream network node of the receiving end;
obtaining the performance measurement parameter of the transmitting end, and determining a performance measurement parameter of the receiving end; and
measuring network performance between the transmitting end and the receiving end according to the performance measurement parameter of the transmitting end and the performance measurement parameter of the receiving end.

An apparatus for measuring network performance includes:
a receiving module, configured to receive at least one performance measurement message, where the performance measurement message carries a performance measurement parameter of a transmitting end, the performance measurement parameter of the transmitting end corresponds to a first data stream, and the performance measurement message is sent by the transmitting end based on the first data stream;
a managing module, configured to obtain the performance measurement parameter of the transmitting end, and determine a performance measurement parameter of the apparatus, where the performance measurement parameter of the apparatus corresponds to the first data stream; and
a measuring module, configured to measure network performance between the transmitting end and the apparatus according to the performance measurement parameter of the transmitting end and the performance measurement parameter of the apparatus, where the network performance corresponds to the first data stream.

A system for measuring network performance includes:
a first device, configured to send a performance measurement message based on a first data stream, where the performance measurement message carries a performance measurement parameter of the first device, and the performance measurement parameter of the first device corresponds to the first data stream;
a second device, configured to: receive the performance measurement message, obtain the performance measurement parameter, which is carried in the performance measurement message, of the first device, and determine a performance measurement parameter of the second device, where the performance measurement parameter of the second device corresponds to the first data stream; and
measure network performance between the first device and the second device according to the performance measurement parameter of the first device and the performance measurement parameter of the second device.

The performance measurement method, apparatus, and system provided in the embodiments of the present invention can detect a packet loss and a delay of each service stream and each hop, and implement stream-based performance detection.

### BRIEF DESCRIPTION OF THE DRAWINGS

FIG. 1 is a schematic diagram of an instance of performing delay detection in the prior art;
FIG. 2 is a schematic diagram of a specific embodiment of the present invention;
FIG. 3 is a schematic diagram of another specific embodiment of the present invention;
FIG. 4 is a flowchart of a method for measuring performance according to an embodiment of the present invention;
FIG. 5 is a flowchart of another method for measuring performance according to an embodiment of the present invention;
FIG. 6 is a flowchart of another method for measuring performance according to an embodiment of the present invention;
FIG. 7 is a schematic diagram of another specific embodiment of the present invention;
FIG. 8 is a schematic diagram of an apparatus for measuring performance according to an embodiment of the present invention;
FIG. 9 is a schematic diagram of another apparatus for measuring performance according to an embodiment of the present invention;
FIG. 10 is a schematic diagram of another apparatus for measuring performance according to an embodiment of the present invention;
FIG. 11 is a schematic diagram of another apparatus for measuring performance according to an embodiment of the present invention;
FIG. 12 is a schematic diagram of a system for measuring performance according to an embodiment of the present invention;
FIG. 13 is a schematic diagram of a format of an Internet Protocol version 4 (IPv4) message;
FIG. 14 is a schematic diagram of a fixed format of a packet loss measurement message according to an embodiment of the present invention;
FIG. 15 is a schematic diagram of a Type Length Value (TLV) format of a packet loss measurement message according to an embodiment of the present invention;
FIG. 16 is a schematic diagram of a fixed format of a delay measurement message according to an embodiment of the present invention;
FIG. 17 is a schematic diagram of a TLV format of a delay measurement message according to an embodiment of the present invention; and
FIG. 18 is a flowchart of another method for measuring performance according to an embodiment of the present invention.

### DETAILED DESCRIPTION OF THE EMBODIMENTS

To make the technical solutions, objectives, and merits of the present invention clearer, the following describes the embodiments of the present invention in detail with reference to the accompanying drawings.

To facilitate the description, the following describes a specific embodiment of the present invention. In an instance shown in FIG. 2, NE 1 and NE 2 are two ends of a maintenance domain.

It is assumed that in this embodiment, the maintenance domain carries three data streams, namely, video stream 1, video stream 2, and voice stream 3. Video stream 1 is forwarded by NE 1 to NE 2 through forwarding path A; video stream 2 is forwarded by NE 1 to NE 2 through forwarding path B; and voice stream 3 is forwarded by NE 1 to NE 2 through forwarding path C. It may be understood that for different forwarding paths, performance such as a packet loss and a delay is different. The following specifically describes the two cases of the packet loss and the delay respectively.

### 1. Packet loss

On the one hand, when the packet loss of video stream 1 needs to be detected, NE 1 may periodically send performance measurement messages to NE 2. For example, a period of sending a performance measurement message may be set. In this period, NE 1 counts sent data messages of video stream 1. When the period ends, NE 1 generates a first performance measurement message, where the first performance measurement message carries a count value a of the sent data messages of video stream 1 that are sent by NE 1. Afterward, NE 1 sends the first performance measurement message based on video stream 1. Likewise, at the beginning of the next period, NE 1 continues to count the sent data messages of video stream 1. After the period ends, NE 1 generates a second performance measurement message, and sends the second performance measurement message based on video stream 1. The second performance measurement message carries a count value b of the sent data messages of video stream 1 that are sent by NE 1.

Alternatively, NE 1 may also send a fixed number of performance measurement messages to NE 2. For example, the fixed number of sent messages may be set. NE 1 counts the sent data messages of video stream 1. When the number of the sent data messages of video stream 1 that are sent by NE 1 is equal to the preset number of sent messages, NE 1 generates a first performance measurement message, where the first performance measurement message carries a count value a of the sent data messages of video stream 1 that are sent by NE 1. Afterward, NE 1 sends the first performance measurement message based on video stream 1. Then, NE 1 continues to count the sent data messages of video stream 1. When the number of the sent data messages of video stream is equal to the preset number of sent messages again, NE 1 generates a second performance measurement message and sends the second performance measurement message based on video stream 1. The second performance measurement message carries a count value b of the sent data messages of video stream 1 that are sent by NE 1.

Alternatively, NE 1 may also send performance measurement messages to NE 2 as required. For example, NE 1 counts the sent data messages of video stream 1. Under triggering of another signal, NE 1 generates a first performance measurement message, where the first performance measurement message carries a count value a of the sent data messages of video stream 1 that are sent by NE 1. Afterward, NE 1 sends the first performance measurement message based on video stream 1. Then, NE 1 continues to count the sent data messages of video stream 1. When being triggered by another signal again, NE 1 generates a second performance measurement message, and sends the second performance measurement message based on video stream 1. The second performance measurement message carries a count value b of the sent data messages of video stream 1 that are sent by NE 1.

Optionally, in an embodiment of the present invention, NE 1 may use the data messages of video stream 1 to obtain the foregoing performance measurement messages. For example, NE 1 may replicate a data message of video stream 1, and replace information that is originally carried in a load of the data message with the count value a or b of the data messages of video stream 1 that are sent by NE 1 to obtain the first performance measurement message or the second performance measurement message. In this way, a forwarding path and a forwarding rule of the first performance measurement message or the second performance measurement message are the same as a forwarding path and a forwarding rule of video stream 1, which ensures that NE 1 sends the first performance measurement message or the second performance measurement message based on video stream 1.

Optionally, in an embodiment of the present invention, a field of a performance measurement message may carry a specified numerical value so that NE 2 can identify the message as a performance measurement message.

On the other hand, NE 2 also counts the data messages of video stream 1 that are received locally. When receiving the first performance measurement message sent by NE 1 based on video stream 1, NE 2 determines a count value a' of the data messages of video stream 1 that are received locally, and according to the received first performance measurement message, obtains the count value a, which is carried in the message, of the data messages of video stream 1 that are sent by NE 1. When receiving the second performance measurement message sent by NE 1 based on video stream 1, NE 2 determines a count value b' of the data messages of video stream 1 that are received locally, and according to the received second performance measurement message, obtains the count value b, which is carried in the message, of the data messages of video stream 1 that are sent by NE 1.

In this case, according to the foregoing performance measurement parameters a, b, a', and b', NE 2 obtains that the number of lost packets while video stream 1 is forwarded by NE 1 to NE 2 is [(b - a) - (b' - a')], where, (b - a) is the number of messages that are sent by NE 1 within an interval of sending two performance measurement messages, (b' - a') is the number of messages that are received by NE 2 within an interval of receiving two performance measurement messages, and a difference between the two numbers is the number of lost packets while video stream 1 is forwarded by NE 1 to NE 2.

In a practical application, NE 1 and NE 2 may use a local counter to count the sent/received data messages of video stream 1.

In the same way, the number of lost packets of video stream 2 and voice stream 3 that are forwarded by NE 1 to NE 2 may also be measured respectively by using the foregoing scheme.

### 2. Delay

When the delay of video stream 1 needs to be detected, NE 1 sends performance measurement messages based on video stream 1, which is similar to the case of measuring the packet loss. NE 1 may periodically send the performance measurement messages to NE 2, or send a fixed number of performance measurement messages to NE 2, or send the performance measurement messages to NE 2 as required. For example, a period of sending performance measurement messages or a fixed number of sent messages may be set. When the period ends or the number of messages that are sent by NE 1 is equal to the preset number of sent messages, NE 1 generates a first performance measurement message and sends the first performance measurement message based on video stream 1. The first performance measurement message carries the local time t at the time of sending the first performance measurement message by NE 1. For example, under triggering of another signal, NE 1 may generate a first performance measurement message, and sends the first performance measurement message based on video stream 1. The first performance measurement message carries the local time t at the time of sending the first performance measurement message by NE 1.

When receiving the first performance measurement message that is sent by NE 1 based on video stream 1, NE 2 determines the local time t' at the time of receiving the first performance measurement message, and obtains a time parameter t carried in the message according to the received first performance measurement message.

In this case, NE 2 obtains that the delay of forwarding video stream 1 from NE 1 to NE 2 is (t' - t) according to the performance measurement parameters t and t'.

Optionally, in an embodiment of the present invention, the local time of NE 1 is synchronous to that of NE 2.

Optionally, in an embodiment of the present invention, a time difference Δt may exists between the local time of NE 1 and that of NE 2. In this case, the corresponding time difference Δt needs to be considered at the time of measuring the delay performance of a video stream that is forwarded from NE 1 to NE 2.

In the forgoing two cases, the packet loss and the delay of the data stream are respectively measured by using the performance measurement messages. In practice, the packet loss and the delay of the data stream may be measured at the same time. For example, a performance measurement message may carry a count value of the data messages of video stream 1 that are sent by NE 1 and a local time parameter of NE 1 at the same time. Apparently, when the message carries the count value of the data messages of video stream 1 that are sent by NE 1 and the local time parameter ofNE 1 at the same time, if only the packet loss or the delay needs to be measured, it is required only to read the count value of the data messages of video stream 1 that are sent by NE 1 or the local time parameter of NE 1. The detailed process is similar to that in the foregoing two cases and therefore is not described here. In the practical application, the foregoing performance measurement messages may also be used to measure network performance such as a packet loss ratio, delay jitter, and throughput.

Taking the throughput as an example, at the beginning, the amount of sent data of video stream 1 is limited to X. If no lost packet is detected, the amount of sent data of video stream 1 is appropriately increased to Y In this case, whether a packet loss occurs is detected again. In this way, the amount of sent data is adjusted repeatedly until a packet loss occurs when the amount of sent data is increased to Z. Z is the network throughput that is obtained through measurement.

Optionally, in an embodiment of the present invention, the foregoing data stream may be carried by an Internet Protocol (IP) network, an Ethernet (ETH), a Multi-Protocol Label Switching (MPLS) network, a Virtual Private LAN Service (VPLS) network, and so on.

Optionally, in an embodiment of the present invention, as regards a communication mode, the foregoing data stream may be a unicast stream described above, or a multicast stream; as regards a service, the foregoing data stream may be a multicast stream such as video stream 1, video stream 2, and voice stream 3 described above, and may also be a common data stream.

Optionally, in an embodiment of the present invention, if performance detection needs to be performed on only a specified data stream, the data stream that needs to be measured may be selected according to information about the data stream, and the performance measurement message is sent based on this data stream. For example, the stream to be measured may be selected according to a doublet (that is, a source IP address and a destination IP address) of the data stream, or a triplet (that is, a source IP address, a source port, and a protocol number) of the data stream, or a quintet (that is, a source IP address, a destination IP address, a source port, a destination port, and a protocol number) of the data stream, or a septet (that is, an interface index, a source IP address, a destination IP address, a source port number, a destination port number, a protocol number, and a service type) of the data stream. Definitely, other information, such as a stream identifier may also be used.

Optionally, in an embodiment of the present invention, if performance detection needs to be performed on all data streams, the data streams may be selected one by one, and the performance measurement messages are sent based on the data streams.

Optionally, in an embodiment of the present invention, a performance measurement message may further carry a sequence number of the performance measurement message. The sequence numbers that are carried in two performance measurement messages sent in succession may be sequentially arranged. Taking the foregoing embodiment as an example, in two performance measurement packets sent in succession, the sequence number carried in one message may be the sequence number carried in the previous message plus 1. If the sequence number carried in the first performance measurement message is 1, the sequence number carried in the second performance measurement message is 2. IfNE 2 finds that the sequence number carried in the second performance measurement message is 3 after receiving the second performance measurement message, NE 2 knows that one performance measurement message fails to be received between the first performance measurement message and the second performance measurement message.

In this embodiment, NE 1 sends a performance measurement message based on a specific data stream, and NE 2 receives the performance measurement message corresponding to the data stream. In this way, the packet loss and the delay of each stream are measured, and the stream-based performance detection is implemented.

In the embodiment shown in FIG. 2, NE 1 and NE 2 are two ends of a maintenance domain. In the practical application, performance measurement is not limited to the two ends of the maintenance domain and may also be performed by an intermediate network device on a packet forwarding path.

FIG. 3 shows another specific embodiment, in which performance measurement can be performed for a physical link and a device at each hop. In the embodiment shown in FIG. 3, NE 3 is an intermediate network device on forwarding path A. A first performance measurement message and a second performance measurement message are consecutively sent at port 1 based on video stream 1. The first performance measurement message carries a count value a1 of data messages of video stream 1 that are sent by NE 1, and the second performance measurement message carries a count value b1 of the data messages of video stream 1 that are sent by NE 1. After respectively receiving the first performance measurement message and the second performance measurement message that correspond to video stream 1, port 2 and port 3 of NE 3, and port 4 and port 5 of NE 2 respectively determine a count value of data messages of video stream 1 that are received locally, so as to obtain the number of lost packets of video stream 1, as shown in Table 1:

**Table 1**

| **Port** | **Count Value of Data Messages of Video Stream 1 That Are Received Locally** | | **Number of Lost Packets** |
|---|---|---|---|
| | **First Performance** | **Second Performance** | |
| | **Measurement Message** | **Measurement Message** | |
| 2 | a2 | b2 | (b1 - a1) - (b2 - a2) |
| 3 | a3 | b3 | (b1 - a1) - (b3 - a3) |
| 4 | a4 | b4 | (b1 - a1) - (b4 - a4) |
| 5 | a5 | b5 | (b1 - a1) - (b5 - a5) |

Further, according to the number of lost packets, a packet loss fault that possibly occurs between NE 1 and NE 2 may be located.

For example, assuming that port 4 detects lost packets, similarly, port 5 also detect the same number of lost packets, but neither port 2 nor port 3 detects any lost packet, it may be determined that a performance fault occurs on a link between port 3 and port 4, which leads to a packet loss.

In another example, port 3, port 4, and port 5 detect the same number of lost packets, but port 2 detects no lost packet; in this case, it may be determined that a performance fault occurs in internal forwarding of NE 3, which leads to a packet loss.

Likewise, the detected number of lost packets may also be used to locate packet loss faults that possibly occur in multiple places, which is not described here.

In an instance shown in FIG. 3, delay performance may also be detected for the physical link and the device at each hop. At port 1, the first performance measurement message is sent based on video stream 1. The first performance measurement message carries the local time t1 at the time of sending the first performance measurement message. After respectively receiving the first performance measurement message corresponding to video stream 1, port 2 and port 3 of NE 3, and port 4 and port 5 of NE 2 respectively determine the local time at the time of locally receiving the first performance measurement message, so as to obtain the delay of video stream 1, as shown in Table 2:

**Table 2**

| **Port** | **Local Time** | **Delay** |
|---|---|---|
| Port 2 | t2 | t2 - t1 |
| Port 3 | t3 | t3 - t1 |
| Port 4 | t4 | t4 - t1 |
| Port 5 | t5 | t5 - t1 |

Further, according to the foregoing delay, a delay fault that possibly occurs between NE 1 and NE 2 may be located.

For example, assuming that port 4 detects a delay abnormality, similarly, port 5 also detects a delay abnormality, and delay abnormality values are consistent, that is, increases or decreases by the same value occur, but delays of port 2 and port 3 are normal, it may be determined that the link between port 3 and port 4 is faulty, which leads to an abnormal delay change.

In another example, port 3, port 4, and port 5 detect a delay abnormality, and the delay abnormality values are consistent, that is, increases or decreases by the same value occur, but the delay of port 2 is normal; in this case, it may be determined that a performance fault occurs in the internal forwarding of NE 3, which leads to an abnormal delay change.

Likewise, the detected delay may also be used to locate delay faults that possibly occur in multiple places, which is not described here.

Optionally, in an embodiment of the present invention, the intermediate network device that receives the performance measurement message does not perform a write operation on the performance measurement message, and therefore does not affect replication or forwarding of the performance measurement message.

Optionally, if the network device that receives the performance measurement message finds the performance measurement message does not need to be forwarded, the performance measurement message may be discarded.

In this embodiment, NE 1 sends a performance measurement message based on a specific data stream, and NE 2 and NE 3 receive the performance measurement message corresponding to the data stream. In this way, stream-based performance detection is implemented, performance detection is performed for the physical link and the device at each hop, and a place, where a fault occurs, in the network is located.

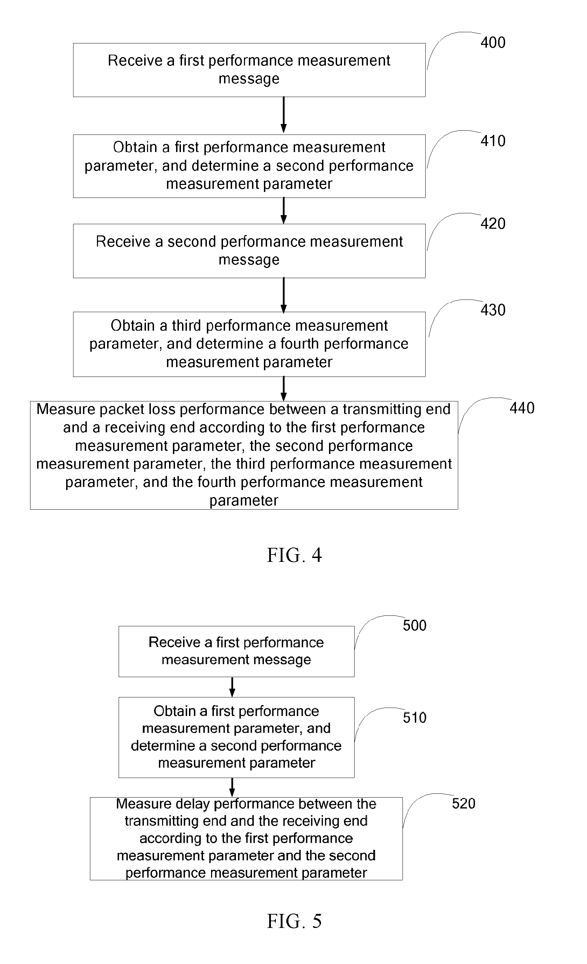

FIG. 4 is a flowchart of a method for measuring performance according to an embodiment of the present invention. The method includes:
400. Receive a first performance measurement message, where the first performance measurement message carries a first performance measurement parameter and the first performance measurement parameter corresponds to a first data stream.

Optionally, in an embodiment of the present invention, the first performance measurement parameter is a performance measurement parameter of a transmitting end, and includes at least a count value of messages of the first data stream sent by the transmitting end.

Optionally, in an embodiment of the present invention, the first performance measurement message is sent by the transmitting end of the first performance measurement message (transmitting end for short) based on the first data stream.

Optionally, in an embodiment of the present invention, the first performance measurement message is sent by the transmitting end periodically, or in a fixed number mode, or as required.

Optionally, in an embodiment of the present invention, the first performance measurement message further carries a sequence number of the performance measurement message.

410. Obtain the first performance measurement parameter, and determine a second performance measurement parameter.

Optionally, in an embodiment of the present invention, the second performance measurement parameter corresponds to the first data stream, and is the performance measurement parameter of a receiving end of the first performance measurement message (receiving end for short), and includes at least a count value of dat messages of the first data stream received by the receiving end.

420. Receive the second performance measurement message, where the second performance measurement message carries a third performance measurement parameter and the third performance measurement parameter corresponds to the first data stream.

Optionally, in an embodiment of the present invention, the third performance measurement parameter is a performance measurement parameter of the transmitting end, and includes at least a count value of data messages of the first data stream sent by the transmitting end.

Optionally, in an embodiment of the present invention, the second performance measurement message is sent by the transmitting end based on the first data stream.

Optionally, in an embodiment of the present invention, the second performance measurement message is sent by the transmitting end periodically, or in a fixed number mode, or as required.

Optionally, in an embodiment of the present invention, the second performance measurement message further carries a sequence number of the performance measurement message.

430. Obtain the third performance measurement parameter, and determine a fourth performance measurement parameter.

Optionally, in an embodiment of the present invention, the fourth performance measurement parameter is a performance measurement parameter of the receiving end, and includes at least a count value of data messages of the first data stream received by the receiving end.

440. Measure packet loss performance between the transmitting end and the receiving end according to the first performance measurement parameter, the second performance measurement parameter, the third performance measurement parameter, and the fourth performance measurement parameter.

Optionally, in an embodiment of the present invention, if the first performance measurement parameter and the third performance measurement parameter are the count value of data messages of the first data stream sent by the transmitting end, and the second performance measurement parameter and the fourth performance measurement parameter are the count value of data messages of the first data stream received by the receiving end, the number of lost packets while the first data stream is forwarded by the transmitting end to the receiving end is [(Third performance measurement parameter - First performance measurement parameter) - (Fourth performance measurement parameter - Second performance measurement parameter)].

Optionally, in an embodiment of the present invention, if the first performance measurement parameter and the third performance measurement parameter include at least the count value of data messages of the first data stream sent by the transmitting end, and the second performance measurement parameter and the fourth performance measurement parameter include at least the count value of data messages of the first data stream received by the receiving end, the number of lost packets while the first data stream is forwarded by the transmitting end to the receiving end is [(Count value of messages that is included in the third performance measurement parameter - Count value of messages that is included in the first performance measurement parameter) - (Count value of messages that is included in the fourth performance measurement parameter - Count value of messages that is included in the second performance measurement parameter)].

Optionally, in an embodiment of the present invention, an intermediate network node that receives the first performance measurement message and the second performance measurement message does not perform a write operation on the performance measurement messages, and therefore does not affect replication or forwarding of the performance measurement messages.

Optionally, if it is found that a performance measurement message does not need to be forwarded after the performance measurement message is received, the performance measurement message may be discarded.

FIG. 5 is a flowchart of another method for measuring performance according to an embodiment of the present invention. The method includes:
500. Receive a first performance measurement message, where the first performance measurement message carries a first performance measurement parameter and the first performance measurement parameter corresponds to a first data stream.

Optionally, in an embodiment of the present invention, the first performance measurement parameter is a performance measurement parameter of a transmitting end, and includes at least a local time parameter of the transmitting end.

Optionally, in an embodiment of the present invention, the first performance measurement message is sent by the transmitting end based on the first data stream.

Optionally, in an embodiment of the present invention, the first performance measurement message is sent by the transmitting end periodically, or in a fixed number mode, or as required.

Optionally, in an embodiment of the present invention, the first performance measurement message further carries a sequence number of the performance measurement message.

510. Obtain the first performance measurement parameter, and determine a second performance measurement parameter.

Optionally, in an embodiment of the present invention, the second performance measurement parameter corresponds to the first data stream, and is a performance measurement parameter of a receiving end, and includes at least a local time parameter of the receiving end.

520. Measure delay performance between the transmitting end and the receiving end according to the first performance measurement parameter and the second performance measurement parameter.

Optionally, in an embodiment of the present invention, when the first performance measurement parameter is the local time parameter of the transmitting end, and the second performance measurement parameter is the local time parameter of the receiving end, the delay of the first data stream forwarded from the transmitting end to the receiving end is (Second performance measurement parameter - First performance measurement parameter).

Optionally, in an embodiment of the present invention, when the first performance measurement parameter includes at least the local time parameter of the transmitting end, and the second performance measurement parameter includes at least the local time parameter of the receiving end, the delay of the first data stream forwarded from the transmitting end to the receiving end is (Local time parameter of the receiving end included in the second performance measurement parameter - Local time parameter of the transmitting end included in the first performance measurement parameter).

Optionally, in an embodiment of the present invention, an intermediate network node that receives the first performance measurement message does not perform a write operation on the performance measurement message, and therefore does not affect replication or forwarding of the performance measurement message.

Optionally, if it is found that a performance measurement message does not need to be forwarded after the performance measurement message is received, the performance measurement message may be discarded.

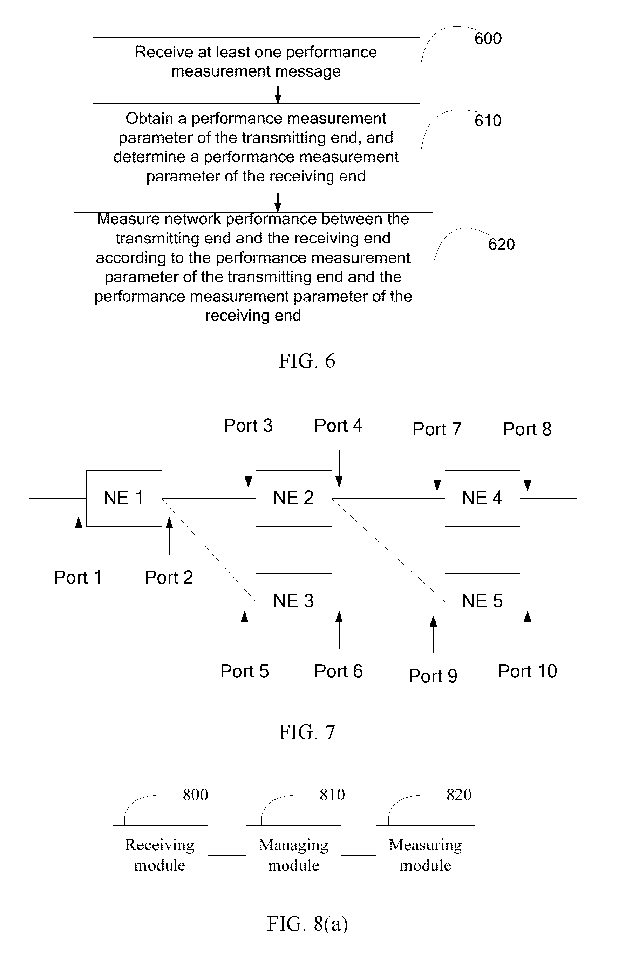

FIG. 6 is a flowchart of another method for measuring performance according to an embodiment of the present invention. The method includes:
600. Receive at least one performance measurement message, where the performance measurement message carries a performance measurement parameter of a transmitting end, and the performance measurement parameter of the transmitting end corresponds to a first data stream.

Optionally, in an embodiment of the present invention, the performance measurement message is sent by the transmitting end based on the first data stream.

Optionally, in an embodiment of the present invention, the performance measurement message is sent by the transmitting end periodically, or in a fixed number mode, or as required.

Optionally, in an embodiment of the present invention, when a packet loss of the first data stream is measured, the performance measurement parameter of the transmitting end include at least a count value of data messages of the first data stream sent by the transmitting end; when a delay of the first data stream is measured, the first performance measurement parameter includes at least a local time parameter of the transmitting end.

610. Obtain the performance measurement parameter of the transmitting end, and determine a performance measurement parameter of a receiving end.

Optionally, in an embodiment of the present invention, the performance measurement parameter of the receiving end corresponds to the first data stream. When a packet loss of the first data stream is measured, the performance measurement parameter of the receiving end includes at least the count value of data messages of the first data stream received by the receiving end; when a delay of the first data stream is measured, the performance measurement parameter of the receiving end includes at least the local time parameter of the receiving end.

620. Measure network performance between the transmitting end and the receiving end according to the performance measurement parameter of the transmitting end and the performance measurement parameter of the receiving end.

Optionally, in an embodiment of the present invention, an intermediate network node that receives the performance measurement message does not perform a write operation on the performance measurement message, and therefore does not affect replication or forwarding of the performance measurement message.

Optionally, if it is found that a performance measurement message does not need to be forwarded after the performance measurement message is received, the performance measurement message may be discarded.

In this embodiment, the transmitting end sends a performance measurement message based on a specific data stream, and the receiving end receives the performance measurement message corresponding to the data stream. In this way, the packet loss and the delay of each stream are detected, and stream-based performance detection is implemented.

To facilitate better understanding of the embodiments of the present invention, the following describes a specific embodiment of a multicast stream.

As shown in FIG. 7, a first multicast stream enters port 1 ofNE 1, and at port 2 ofNE 1, the first multicast stream is replicated and forwarded to NE 2 and NE 3; at port 4 of NE 2, the first multicast stream is replicated and forwarded to NE 4 and NE 5 (definitely, it may be understood that for brevity, FIG. 7 does not show a complete forwarding path of the first multicast stream).

To measure performance such as a packet loss and a delay of the first multicast stream, NE 1 may send a performance measurement message periodically, or in a fixed number mode, or as required. The performance measurement message carries a performance measurement parameter of a transmitting end (that is, NE 1 in this specific embodiment). The performance measurement parameter of the transmitting end may be a count value of data messages of the first multicast stream sent by the transmitting end, or a local time parameter of the transmitting end, or the count value of messages that are sent by the transmitting end and the local time parameter, which is not specifically limited in this specific embodiment.

Similarly to the embodiment shown in FIG. 2, the transmitting end sends the performance measurement message based on the first multicast stream. For example, with respect to a forwarding path and a forwarding rule, the performance measurement message is equivalent to the first multicast stream, and at an intermediate network node that replicates the first multicast stream, the performance measurement message is also replicated and forwarded.

After receiving the performance measurement message corresponding to the first multicast stream, a receiving end (that is, NE 2, NE 3, NE 4, and NE 5 in this specific embodiment) can detect the performance such as the packet loss and delay of the first multicast stream forwarded from NE 1 to the local receiving end. The specific implementation is similar to the description in the embodiment shown in FIG. 2; therefore, no description is further provided here.

Similarly to the specific embodiment shown in FIG. 3, this specific embodiment can also perform performance detection for a physical link and a device at each hop. The specific implementation is similar to the description in the embodiment shown in FIG. 3; therefore, no description is further provided here.

In this embodiment, NE 1 sends a performance measurement message based on a specific multicast stream, and the receiving end receives the performance measurement message corresponding to the multicast stream. In this way, the packet loss and the delay of each multicast stream are measured, and performance detection based on the multicast stream is implemented. Further, performance detection can be performed for the physical link and the device at each hop, and a place, where a fault occurs, in the network is located.

An embodiment of the present invention provides an apparatus for measuring performance. As shown in FIG. 8(a), the apparatus includes:
a receiving module 800, configured to receive at least one performance measurement message, where the performance measurement message carries a performance measurement parameter of a transmitting end, the performance measurement parameter of the transmitting end corresponds to a first data stream, and the performance measurement message is sent by the transmitting end based on the first data stream;
a managing module 810, configured to obtain the performance measurement parameter of the transmitting end, and determine a performance measurement parameter of a receiving end, where the performance measurement parameter of this apparatus corresponds to the first data stream; and
a measuring module 820, configured to measure network performance between the transmitting end and the receiving end according to the performance measurement parameter of the transmitting end and the performance measurement parameter of the receiving end, where the network performance corresponds to the first data stream.

In this embodiment, the receiving end is the foregoing apparatus for measuring performance.

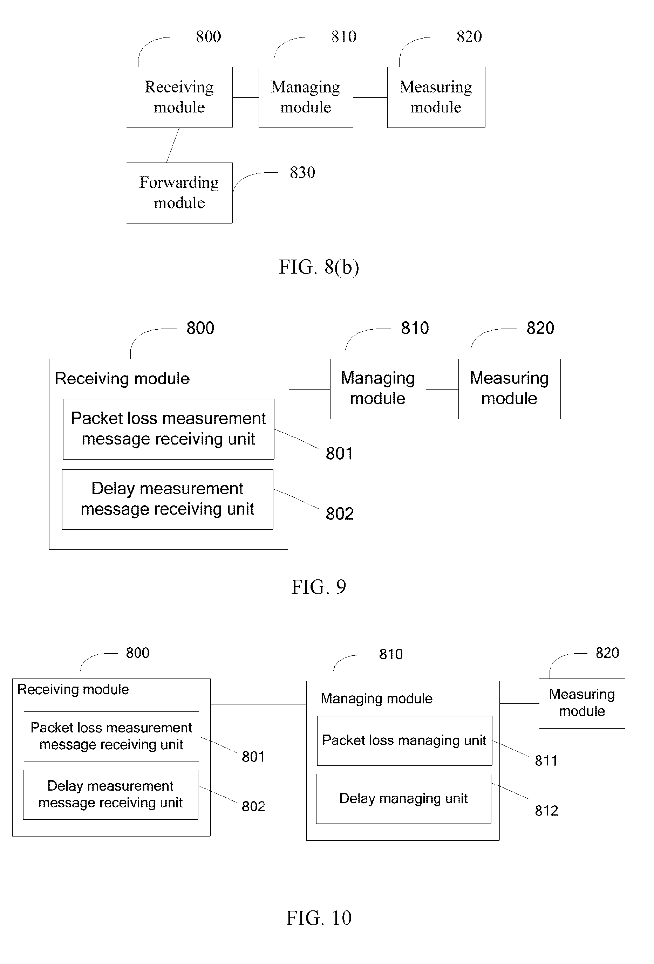

Optionally, as shown in FIG. 9, the receiving module 800 may include:
a packet loss measurement message receiving unit 801, configured to receive at least one performance measurement message, where the performance measurement message carries a performance measurement parameter of the transmitting end, and the performance measurement parameter includes at least a count value of data messages of the first data stream sent by the transmitting end;
and/or
a delay measurement message receiving unit 802, configured to receive at least one performance measurement message, where the performance measurement message carries performance a measurement parameter of the transmitting end, and the performance measurement parameter includes at least a local time parameter at the time of sending the performance measurement message by the transmitting end.

For ease of description, FIG. 9 shows only a situation where the receiving module 800 includes the packet loss measurement message receiving unit 801 and the delay measurement message receiving unit 802 at the same time.

Optionally, as shown in FIG. 10, the managing module 810 may include:
a packet loss managing unit 811, configured to: obtain the count value of data messages of the first data stream sent by the transmitting end, where the count value is carried in the performance measurement message that is received by the packet loss measurement message receiving unit 801; and determine a count value of data messages of the first data stream received by the receiving end;
and/or
a delay managing unit 812, configured to: obtain the local time parameter at the time of sending the performance measurement message by the transmitting end, where the local time parameter is carried in the performance measurement message that is received by the delay measurement message receiving unit 802; and determine a local time parameter at the time of receiving the performance measurement message by the receiving end.

For ease of description, FIG. 10 shows only a situation where the managing module 810 includes the packet loss managing unit 811 and the delay managing unit 812 at the same time.

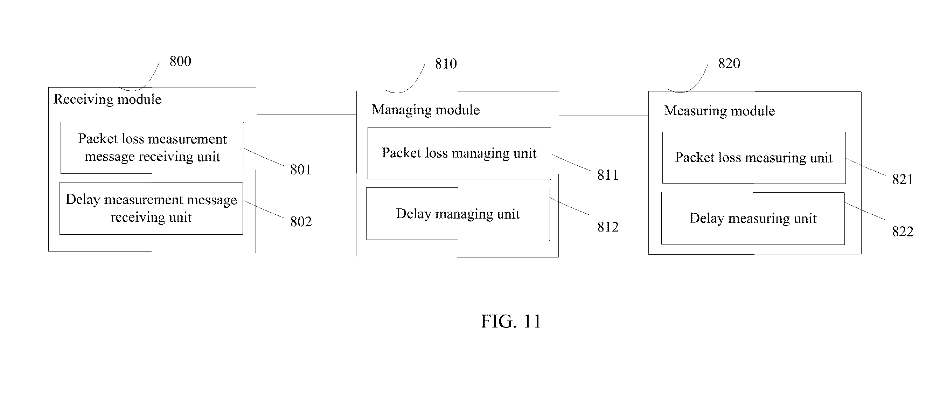

Optionally, as shown in FIG. 11, the measuring module 820 may include:
a packet loss measuring unit 821, configured to measure packet loss performance of the first data stream forwarded from the transmitting end to the receiving end according to the count value, which is obtained by the packet loss managing unit 811, of data messages of the first data stream sent by the transmitting end and the determined count value of data messages of the first data stream received by the receiving end;
and/or
a delay measuring unit 822, configured to measure delay performance of the first data stream forwarded from the transmitting end to the receiving end according to the local time parameter, which is obtained by the delay managing unit 812, at the time of sending the performance measurement message by the transmitting end and the determined local time parameter at the time of receiving the performance measurement message by the receiving end.

For ease of description, FIG. 11 shows only a situation where the measuring module 820 includes the packet loss measuring unit 821 and the delay measuring unit 822 at the same time.

Optionally, in an embodiment of the present invention, as shown in FIG. 8(b), the foregoing apparatus for measuring performance may further include:
a sending module 830, configured to: forward the performance measurement message received by the receiving module 800, or replicate and forward the performance measurement message received by the receiving module 800.

In this embodiment, the transmitting end sends a performance measurement message based on a specific data stream, and the apparatus for measuring performance at the receiving end receives the performance measurement message corresponding to the data stream. In this way, the packet loss and the delay of each stream are detected, and stream-based performance detection is implemented.

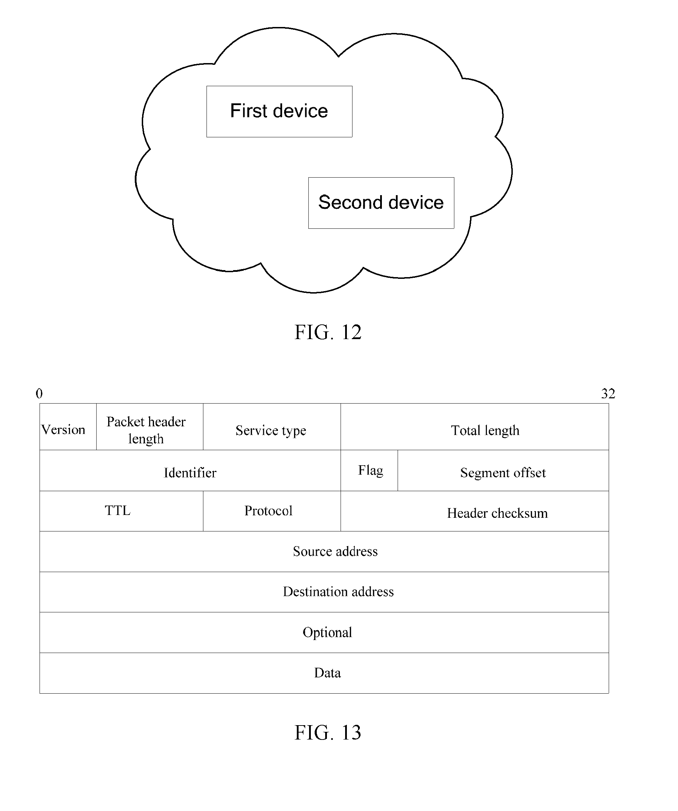

An embodiment of the present invention provides a system for measuring performance. As shown in FIG. 12, the system includes:
a first device, configured to send a performance measurement message based on a first data stream, where the performance measurement message carries a performance measurement parameter of the first device, and the performance measurement parameter of the first device corresponds to the first data stream;
a second device, configured to: receive the performance measurement message, obtain the performance measurement parameter, which is carried in the performance measurement message, of the first device, and determine a performance measurement parameter of the second device, where the performance measurement parameter of the second device corresponds to the first data stream; and
measure network performance between the first device and the second device according to the performance measurement parameter of the first device and the performance measurement parameter of the second device.

Optionally, in an embodiment of the present invention, the second network device forwards or replicates the performance measurement message after receiving the performance measurement message.

In this embodiment, the first device sends a performance measurement message based on a specific data stream, and the second device receives the performance measurement message corresponding to the data stream. In this way, a packet loss and a delay of each stream are detected, and stream-based performance detection is implemented.

As described above, the foregoing data stream may be carried by an IP network, an MPLS network, a VPLS network, and so on. Therefore, in the embodiment of the present invention, the performance measurement message may also be constructed according to an actual network protocol.

The following describes several formats of the performance measurement message, taking that the performance measurement message is an IP message as an example.

FIG. 13 shows a basic format of an IPv4 message (IP message for short). A performance measurement parameter in the embodiment of the present invention may be carried in a data part of the IP message.

When a packet loss needs to be measured, the format of the performance measurement message may be a fixed format or a TLV (Type, Length, and Value) format.

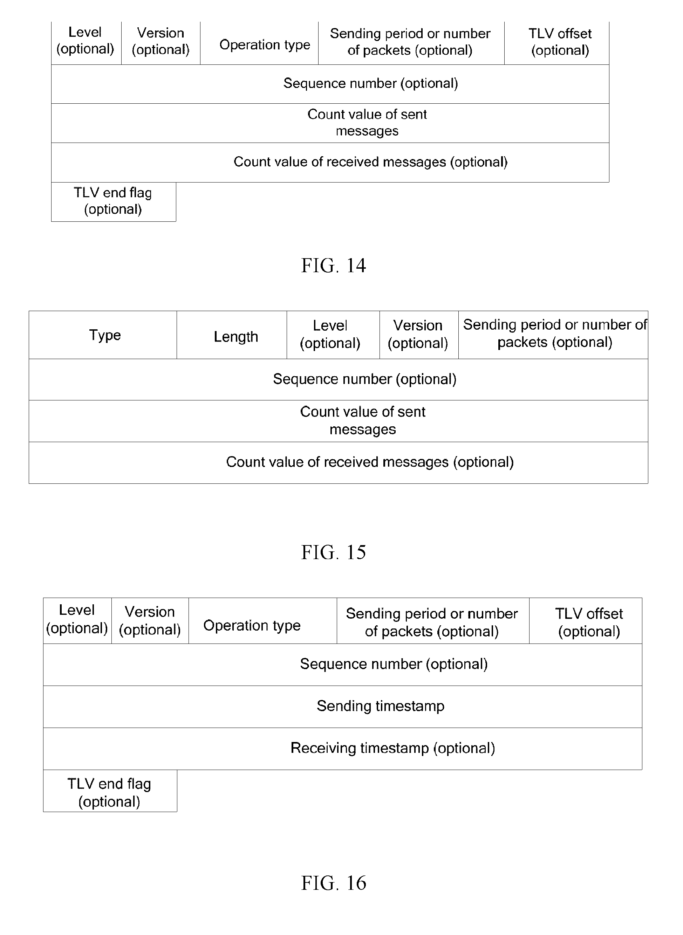

For example, the fixed format may be a format shown in FIG. 14, where:
level: indicates a maintenance domain to which the performance measurement message is applicable;
version: indicates a version of a measurement method to which the performance measurement message is applicable;
operation type: indicates that a type of the performance measurement message is a packet loss measurement message;
sending period or number of packets: indicates a preset period of sending the performance measurement message, or a preset fixed number of sent messages, or a mode of sending the performance measurement message as required; this parameter is optional;
TLV offset: indicates a position of the TLV in a message; TLV is designed to extend a function; this parameter is optional;
sequence number: indicates a sequence of the packet loss measurement message; this parameter is optional;
count value of sent data messages: records the number of sent messages;
count value of received data messages: records the number of received messages; this parameter is optional; and
TLV end flag: indicates an end of all TLVs; this parameter is optional.

In another example, the TLV format may be a format shown in FIG. 15, where:
type: indicates that a type of a message is a packet loss measurement message; this parameter is extensible;
length: indicates the length of data in the message, measured in bytes;
level: indicates the maintenance domain to which the performance measurement message is applicable;
version: indicates the version of the measurement method to which the performance measurement message is applicable;
sending period or number of packets: indicates the preset period of sending the performance measurement message, or the preset fixed number of sent messages, or the mode of sending the performance measurement message as required; this parameter is optional;
sequence number: indicates the sequence of the packet loss measurement message; this parameter is optional;
count value of sent data messages: records the number of sent messages; and
count value of received data messages: records the number of received messages; this parameter is optional.

Likewise, when a delay needs to be measured, the format of the performance measurement message may be a fixed format or a TLV format.

For example, the fixed format may be a format shown in FIG. 16, where:
level: indicates the maintenance domain to which the performance measurement message is applicable;
version: indicates the version of the measurement method to which the performance measurement message is applicable;
operation type: indicates that the type of the performance measurement message is a delay measurement message;
sending period or number of packets: indicates the preset period of sending the performance measurement message, or the preset fixed number of sent messages, or the mode of sending the performance measurement message as required; this parameter is optional;
TLV offset: indicates the position of the TLV in the message; TLV is designed to extend a function; this parameter is optional;
sequence number: indicates a sequence of sending the delay measurement message; this parameter is optional;
sending timestamp: records the time of sending the delay measurement message;
receiving timestamp: records the time of receiving the delay measurement message; this parameter is optional; and

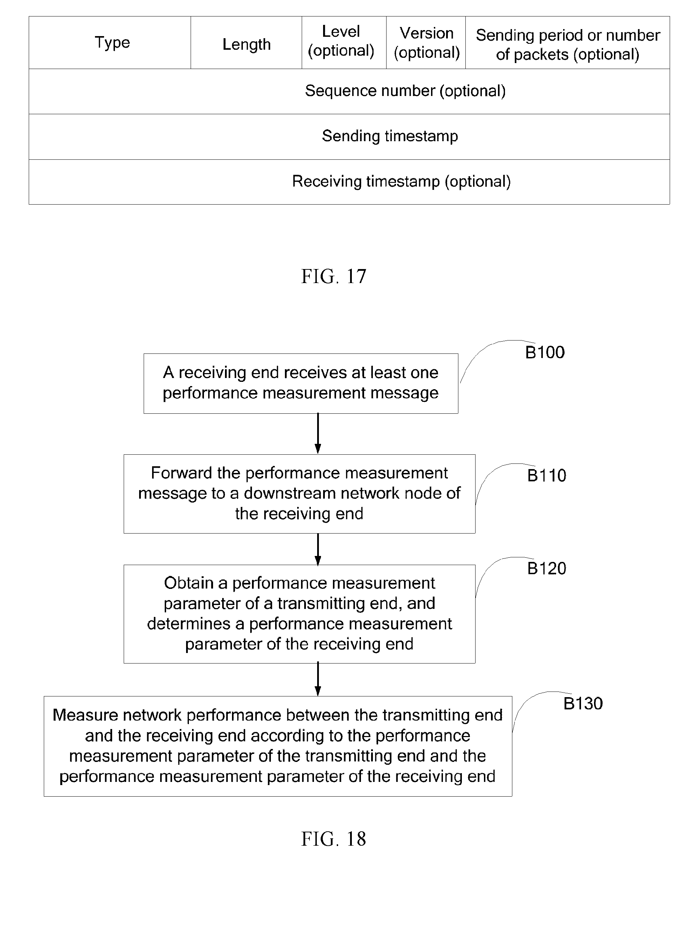

TLV end flag: indicates the end of all TLVs; this parameter is optional. In another example, the TLV format may be a format shown in FIG. 17, where:
type: indicates that the type of the message is the delay measurement message; this parameter is extensible;
length: indicates the length of data in the message, measured in bytes;
level: indicates the maintenance domain to which the performance measurement message is applicable;
version: indicates the version of the measurement method to which the performance measurement message is applicable;
sending period or number of packets: indicates the preset period of sending the performance measurement message, or the preset fixed number of sent messages, or the mode of sending the performance measurement message as required; this parameter is optional;
sequence number: indicates the sequence of sending the delay measurement message; this parameter is optional;
sending timestamp: records the time of sending the delay measurement message; and
receiving timestamp: records the time of receiving the delay measurement message; this parameter is optional.

FIG. 14 to FIG. 17 are schematic diagrams of only several message formats. In the embodiment of the present invention, the format of the performance measurement message is not limited to these formats.

Optionally, in the embodiments of the present invention, specific values may be set in some fields of a message so that a device receiving the performance measurement message can identify the message as a performance measurement message.

For example, in some scenarios, a doublet is used to distinguish different data streams. In this case, a protocol field of the performance measurement message may be set to 255. In this case, the performance measurement message can be identified according to this field. Meanwhile, the protocol field of the performance measurement message is different from a protocol field of the data stream, but the performance measurement message and the data stream packets can still be forwarded on the same forwarding path according to the same forwarding rule.

In other scenarios, a quintet or a septet is used to distinguish different data streams. In this case, a proper field other than the quintet and the septet may be selected for carrying a specified value so that the receiving end can identify the performance measurement message.

The specific configuration depends on the specific network, and is not limited in the embodiments of the present invention.

Optionally, the performance measurement message may be a unicast message or multicast message.

Optionally, the performance measurement message may be an IPv6 message.

An embodiment of the present invention provides another method for measuring performance. As shown in FIG. 18, the method includes:
B100. A receiving end receives at least one performance measurement message, where the performance measurement message carries a performance measurement parameter of a transmitting end of the performance measurement message.
B110. Forward the performance measurement message to a downstream network node of the receiving end.
B120. Obtain the performance measurement parameter of the transmitting end and determine a performance measurement parameter of the receiving end.
B 130. Measure network performance between the transmitting end and the receiving end according to the performance measurement parameter of the transmitting end and the performance measurement parameters of the receiving end.

Optionally, in an embodiment of the present invention, B110 may be performed after B120, which does not affect implementation of this embodiment of the present invention.

Optionally, in an embodiment of the present invention, after receiving the performance measurement message, the receiving end may replicate the received performance measurement message, and obtain the performance measurement parameter of the transmitting end from the replicated performance measurement message. The received performance measurement message is forwarded normally.

Optionally, in an embodiment of the present invention, the performance measurement message is sent by the transmitting end based on a first data stream. In this case, B110 may specifically be:
The receiving end forwards, or replicates and forwards the performance measurement message to a downstream network node based on the first data stream.

Optionally, in an embodiment of the present invention, similarly to situations that are described in the embodiments shown in FIG. 2 to FIG. 17, the first data stream may be a unicast stream or multicast stream.

For example, when the first data stream is a unicast stream, the receiving end forwards the performance measurement message to the downstream network node based on the first data stream; when the first data stream is a multicast stream, the receiving end also forwards the performance measurement message to the downstream network node based on the first data stream. At the network node that replicates the first data stream, the performance measurement message is also replicated and forwarded.

This embodiment is also applicable to other situations described in the embodiments shown in FIG. 2 to FIG. 17, and no further description is provided.

In this embodiment, after receiving a performance measurement message, an intermediate network node measures corresponding network performance, and forwards the performance measurement message so that the downstream network node of the intermediate network node can receive the performance measurement message. In this way, both end-to-end network performance measurement and segment-to-segment network performance measurement are implemented, and a network fault can be further located.

According to descriptions in the foregoing embodiments, persons of ordinary skill in the art are clearly aware that the embodiments of the present invention may be implemented through hardware, or through software in addition to a necessary universal hardware platform. Therefore, the technical solutions of the present invention may be embodied in a software product. The software product may be stored in a storage medium such as a Read Only Memory or Random Access Memory (ROM/RAM), a magnetic disk, or a Compact Disk-Read Only Memory (CD-ROM), and incorporate several instructions for instructing a computer device, or a server, or another network device to execute the methods specified in any embodiment of the present invention or part of the embodiment.

The foregoing descriptions are merely embodiments of the present invention, but not intended to limit the protection scope of the present invention. Any modification, equivalent replacement, or improvement made without departing from the idea and principles of the present invention shall fall within the protection scope of the present invention.

## Claims

1. A method for measuring network performance, comprising:
receiving, by a receiving end, at least one performance measurement message, wherein the performance measurement message carries a performance measurement parameter of a transmitting end of the performance measurement message, and the performance measurement parameter of the transmitting end corresponds to a first data stream;
obtaining the performance measurement parameter of the transmitting end, and determining a performance measurement parameter of the receiving end, wherein the performance measurement parameter of the receiving end corresponds to the first data stream; and
measuring network performance between the transmitting end and the receiving end according to the performance measurement parameter of the transmitting end and the performance measurement parameter of the receiving end, wherein the network performance corresponds to the first data stream; wherein
the performance measurement message is sent by the transmitting end based on the first data stream.

2. The method according to claim 1, wherein:
after the receiving, by the receiving end, the at least one performance measurement message, the performance measurement message is forwarded or replicated and forwarded; and
the receiving end is an intermediate network node.

3. The method according to claim 1 or claim 2, wherein:
the performance measurement parameter of the transmitting end comprises at least a count value of messages of the first data stream sent by the transmitting end; and
the performance measurement parameter of the receiving end comprises at least a count value of messages of the first data stream received by the receiving end.

4. The method according to claim 3, wherein:
the receiving, by the received end, the at least one performance measurement message comprises:
receiving, by the receiving end, a first performance measurement message and a second performance measurement message consecutively, wherein the first performance measurement message carries a first performance measurement parameter of the transmitting end, and the second performance measurement message carries a third performance measurement parameter of the transmitting end;
the obtaining the performance measurement parameter of the transmitting end and determining the performance measurement parameter of the receiving end comprises:
obtaining the first performance measurement parameter, and determining a second performance measurement parameter of the receiving end; obtaining the third performance measurement parameter, and determining a fourth performance measurement parameter of the receiving end;
the measuring the network performance between the transmitting end and the receiving end according to the performance measurement parameter of the transmitting end and the performance measurement parameter of the receiving end comprises:
measuring packet loss performance between the transmitting end and the receiving end according to the first performance measurement parameter, the second performance measurement parameter, the third performance measurement parameter, and the fourth performance measurement parameter.

5. The method according to claim 1 or claim 2, wherein:
the performance measurement parameter of the transmitting end comprises at least a local time parameter at the time of sending the performance measurement message by the transmitting end;
the performance measurement parameter of the receiving end comprises at least a local time parameter at the time of receiving the performance measurement message by the receiving end;
the measuring the network performance between the transmitting end and the receiving end according to the performance measurement parameter of the transmitting end and the performance measurement parameter of the receiving end comprises:
measuring delay performance between the transmitting end and the receiving end according to the local time parameter at the time of sending the performance measurement message by the transmitting end and the local time parameter at the time of receiving the performance measurement message by the receiving end.

6. A method for measuring network performance, comprising:
receiving, by a receiving end, at least one performance measurement message, where the performance measurement message carries a performance measurement parameter of a transmitting end of the performance measurement message;
forwarding the performance measurement message to a downstream network node of the receiving end;
obtaining the performance measurement parameter of the transmitting end, and determining a performance measurement parameter of the receiving end; and
measuring network performance between the transmitting end and the receiving end according to the performance measurement parameter of the transmitting end and the performance measurement parameter of the receiving end.

7. The method according to claim 6, wherein:
the performance measurement message is sent by the transmitting end based on a first data stream;
the forwarding the performance measurement message to the downstream network node of the receiving end comprises:
forwarding or replicating and forwarding, by the receiving end, the performance measurement message to the downstream network node of the receiving end based on the first data stream.

8. An apparatus for measuring network performance, comprising:
a receiving module, configured to receive at least one performance measurement message, wherein the performance measurement message carries a performance measurement parameter of a transmitting end, the performance measurement parameter of the transmitting end corresponds to a first data stream, and the performance measurement message is sent by the transmitting end based on the first data stream;
a managing module, configured to obtain the performance measurement parameter of the transmitting end, and determine a performance measurement parameter of the apparatus, wherein the performance measurement parameter of the device corresponds to the first data stream; and
a measuring module, configured to measure network performance between the transmitting end and the device according to the performance measurement parameter of the transmitting end and the performance measurement parameter of the apparatus, wherein the network performance corresponds to the first data stream.

9. The apparatus according to claim 8, wherein the receiving module comprises:
a packet loss measurement message receiving unit, configured to receive the performance measurement message, wherein the performance measurement message carries the performance measurement parameter of the transmitting end, and the performance measurement parameter comprises at least a count value of messages of the first data stream sent by the transmitting end;
and/or
a delay measurement message receiving unit, configured to receive the performance measurement message, wherein the performance measurement message carries the performance measurement parameter of the transmitting end, and the performance measurement parameter comprises at least a local time parameter at the time of sending the performance measurement message by the transmitting end.

10. The apparatus according to claim 9, wherein the managing module comprises:
a packet loss managing unit, configured to: obtain the count value of messages of the first data stream sent by the transmitting end, wherein the count value is carried in the performance measurement message that is received by the packet loss measurement message receiving unit; and determine a count value of messages of the first data stream received by the apparatus;
and/or
a delay managing unit, configured to: obtain the local time parameter at the time of sending the performance measurement message by the transmitting end, wherein the local time parameter is carried in the performance measurement message that is received by the delay measurement message receiving unit; and determine a local time parameter at the time of receiving the performance measurement message by the apparatus.

11. The apparatus according to claim 10, wherein the measuring module comprises:
a packet loss measuring unit, configured to measure packet loss performance of the first data stream forwarded from the transmitting end to the apparatus according to the count value, which is obtained by the packet loss managing unit, of messages of the first data stream sent by the transmitting end and the determined count value of messages of the first data stream received by the apparatus;
and/or
a delay measuring unit, configured to measure delay performance of the first data stream forwarded from the transmitting end to the apparatus according to the local time parameter, which is obtained by the delay managing unit, at the time of sending the performance measurement message by the transmitting end and the determined local time parameter at the time of receiving the performance measurement message by the apparatus.

12. The apparatus according to any one of claims 8-11, further comprising:
a sending module, configured to: forward the performance measurement message received by the receiving module, or replicate and forward the performance measurement message received by the receiving module.

13. A system for measuring network performance, comprising:
a first device, configured to send a performance measurement message based on a first data stream, wherein the performance measurement message carries a performance measurement parameter of the first device, and the performance measurement parameter of the first device corresponds to the first data stream; and
a second device, configured to: receive the performance measurement message, obtain the performance measurement parameter, which is carried in the performance measurement message, of the first device, and determine a performance measurement parameter of the second device, wherein the performance measurement parameter of the second device corresponds to the first data stream; and
measure network performance between the first device and the second device according to the performance measurement parameter of the first device and the performance measurement parameter of the second device.
